(19) **Europäisches Patentamt**

**European Patent Office**

**Office européen des brevets**

(11) **EP 1 090 802 A1**

(12) **EUROPEAN PATENT APPLICATION**

| | |
|---|---|
| (43) Date of publication:<br>**11.04.2001 Bulletin 2001/15** | (51) Int. Cl.$^{7}$: **B60K 41/22** |

(21) Application number: **00121692.8**

(22) Date of filing: **04.10.2000**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI** | (72) Inventor: **Binello, Domenico**<br>**14100 Cortandone (IT)** |
| (30) Priority: **05.10.1999 IT TO990854** | (74) Representative:<br>**Franzolin, Luigi et al**<br>**STUDIO TORTA S.r.l.,**<br>**Via Viotti, 9**<br>**10121 Torino (IT)** |
| (71) Applicant: **DAYCO EUROPE S.r.l.**<br>**64010 Colonnella (Teramo) (IT)** | |

(54) **Automatic transmission unit with a continuously variable ratio**

(57) Automatic transmission unit (1) with a continuously variable ratio, comprising a clutch (2) which can be connected at its intake to a drive shaft (4) of a vehicle, and a trapezoidal-belt transmission (7), comprising a drive pulley (34) and a driven pulley (35), in which each of the pulleys (34,35) comprises a half-pulley (37; 47) which is fixed, and a half-pulley (40; 50) which is mobile axially in order to vary the transmission ratio; the clutch (2) and the mobile half-pulley (40) of the drive pulley (34) are controlled by a single, electrically actuated control device (65), the output unit (67) of which controls along a first portion of its own path the engagement or release of the clutch (2), and along a second portion of the path controls the position of the mobile half-pulley (40) of the drive pulley (34).

Fig.1

EP 1 090 802 A1

**Description**

The present invention relates to an automatic transmission unit with a continuously variable ratio.

The present invention can be applied advantageously, but not exclusively, to low-power vehicles such as micro-cars and so-called city cars.

Automatic units of the aforementioned type are known, which substantially comprise a trapezoidal-belt transmission, which can transmit motion from a drive pulley to a driven pulley. The pulleys consist of half-pulleys which face one another axially, such as to define a groove to accommodate the belt, and are mobile axially relative to one another, such as to vary the amplitude of the groove, and thus the radius of winding of the belt on which the transmission ratio depends.

The transmission ratio is varied by means of an actuator, which is controlled by a control unit in response to input signals received from sensors for operative parameters of the vehicle (for example speed, position of the accelerator or of the butterfly valve, position of the gear lever).

The transmission units of the type briefly described must provide a neutral function, i.e. a function of lack of transmission of torque to the driven pulley, when the vehicle is at a standstill.

In the most economical solutions, this function is provided simply by releasing the axial compression on the belt in the drive pulley; when compression is lacking, there is insufficient friction on the sides of the belt, and thus torque is lacking. The pick-up thus takes place by means of sliding in loaded conditions of the belt in the drive pulley, which causes premature wear of the belt itself. The transmission of the motion at low speeds is also irregular, with abrupt transitions from a condition of sliding to a condition of gripping of the belt and vice versa, thus causing characteristic jerky functioning of the transmission.

Transmission units are also known which are provided with a clutch upstream from the belt drive, and can connect the drive pulley of the latter selectively to the drive shaft. In this case, the neutral function is provided by the clutch alone; in some known solutions, in parallel with the variable-ratio transmission, there is use of a fixed-ratio transmission, for example with gears, such as to obtain the pick-up by means of the clutch and the fixed-ratio transmission, and thus to avoid sliding in loaded conditions of the belt in the drive pulley of the variable-ratio transmission. However, transmission units of this type are complex and costly, since they comprise a device to control the clutch, and a device to control the variable-ratio transmission, optionally as well as coupling components in order to actuate the fixed-ratio transmission selectively. Use of several independent control devices also makes control of the transmission complex.

The object of the present invention is to provide an automatic transmission unit with a continuously variable ratio, which is without the disadvantages associated with the above-described known units.

This object is achieved by the present invention, in that it relates to an automatic transmission unit with a continuously variable ratio, for a vehicle, the unit comprising:

an intake unit;
an intermediate shaft;
a clutch which is interposed between the said intake unit and the said intermediate shaft, and is provided with a first thrust unit in order to control engagement and release of the clutch itself;
an output shaft;
a transmission with a continuously variable ratio, which is interposed between the said intermediate shaft and the said output shaft, and comprises a drive pulley which is connected in rotation to the said intermediate shaft, a driven pulley which is connected in rotation to the said output shaft, and a trapezoidal transmission belt, which connects the said pulleys to one another, each of the said pulleys comprising a pair of half-pulleys which are provided with relative axial motion, in order to vary the transmission ratio of the said variable-ratio transmission, the said transmission comprising a second thrust unit which acts on one of the said half-pulleys, in order to vary the said transmission ratio;
the said transmission unit being characterised in that it comprises a single control device for the said clutch and for the said transmission, the said device comprising a control unit which acts respectively on the said first thrust unit and on the said second thrust unit, along successive portions of the path of the latter.

In order to assist understanding of the present invention, a preferred embodiment is described hereinafter, purely by way of non-limiting example, and with reference to the attached drawings, in which:

figure 1 is an elevated lateral view in cross-section of a transmission unit produced according to the present invention;
figure 2 is a front view, partially in cross-section, of a first detail of the unit in figure 1;
figure 3 is an elevated lateral view of a second detail of the unit in figure 1;
figure 4 is a cross-section along the line IV-IV in figure 1; and
figure 5 is a block diagram of a control device of the unit in figure 1.

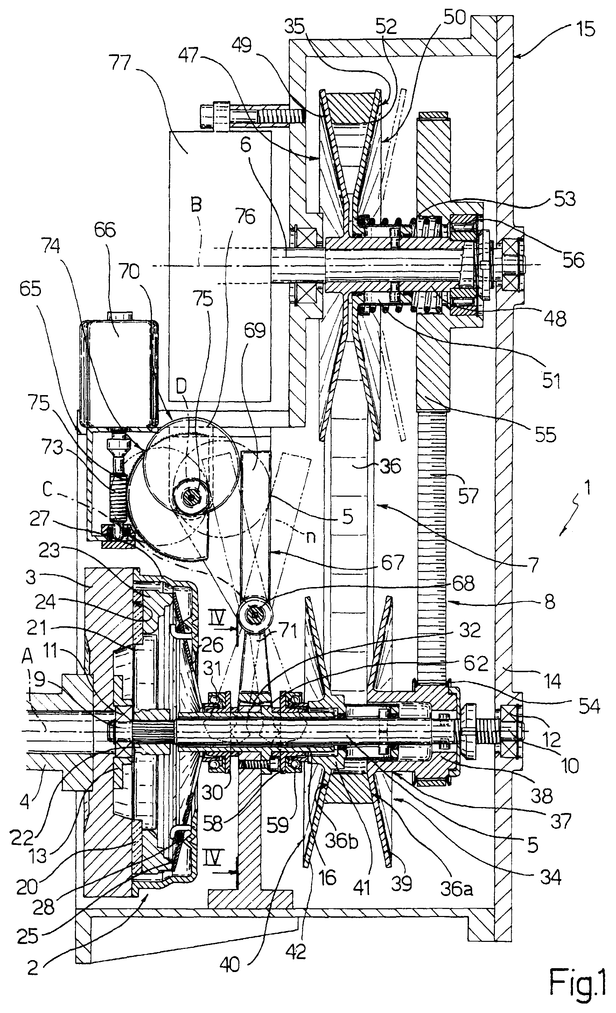

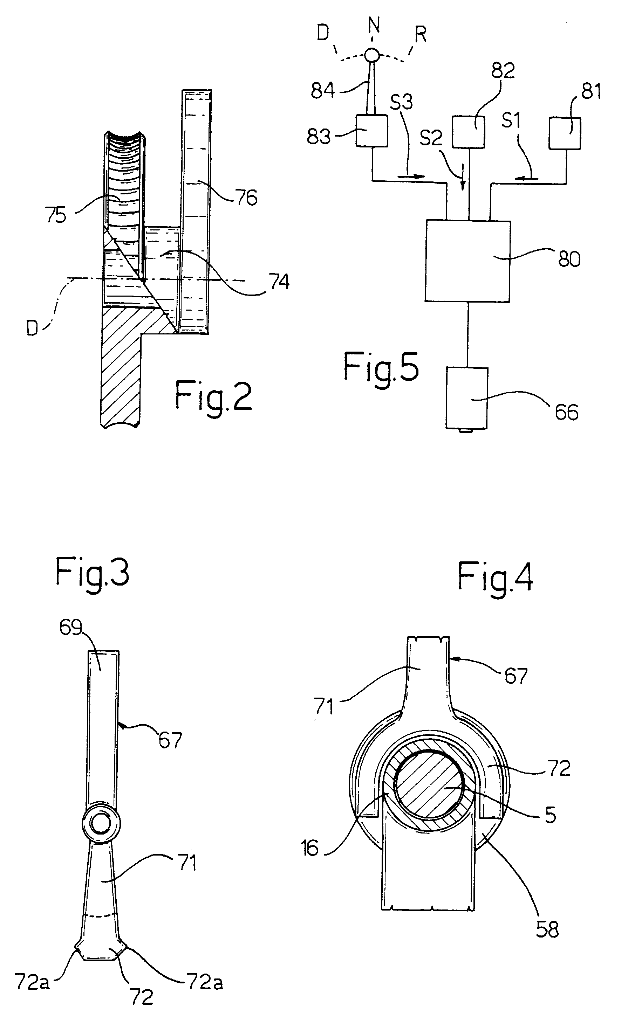

With reference to figure 1, 1 indicates as a whole a variable-ratio transmission unit comprising a clutch 2, the intake unit of which is a flywheel 3, which is integral with a drive shaft 4 of the vehicle, an intermediate shaft 5 with an axis A, which can receive motion from the clutch 2, an output shaft 6 with an axis B which is parallel to the axis A, and a pair of belt-type transmissions 7, 8, respectively with a variable and a fixed transmission ratio, which are interposed in parallel with one another, between the intermediate shaft 5 and the output shaft 6. The intermediate shaft 5 is supported at its own ends 9, 10 by respective bearings 11, 12, which are accommodated respectively in a support ring 13 which is integral with the flywheel 3, and in a wall 14 of a casing 15, which accommodates the transmission unit 1. The intermediate shaft 5 is also fitted such that it passes through a fixed tube 16 (figure 4) which is integral with the casing 15, and the function of which will be explained hereinafter.

In a known manner, the clutch 2 comprises a clutch disc 20, which is connected by means of a flexible coupling 21 to a hub 22, which is integral with the intermediate shaft 5, and a disc thrust ring 23, which normally keeps the clutch disc engaged with friction against an annular surface 24 of the flywheel 3, under the thrust generated by a Belleville washer 25 of a known type. The spring 25 has a plurality of radial plates 26, which extend in a projecting manner towards the interior, and act as an actuating lever. The spring 25 is connected axially in a two-way manner to a housing 27 which is integral with the flywheel 3, at an intermediate annular end 28 of the latter, thus substantially defining a fulcrum for the resilient deformations of the spring itself.

The clutch 2 is controlled by a first annular thrust unit 30, which slides axially along an end portion of the tube 16, by means of a thrust bearing 31. The thrust unit 30 is mobile axially between a position of rest, illustrated in figure 1, in which it co-operates axially against a stop 32 which is secured to the tube 16, beneath the thrust of the spring 25, towards a position of release, not shown (displaced to the left with reference to figure 1), in which it acts on the plates 26 of the spring 25, thus unloading the clutch disc 20, by means of the above-described intermediate support.

The variable-ratio transmission 7 comprises a drive pulley 34 which is supported by the intermediate shaft 5, and is integral in rotation with the latter, a driven pulley 35 which is supported by the output shaft 6, and is integral in rotation with the latter, and a trapezoidal belt 35, which is wound around the said pulleys. More particularly, the drive pulley 34 consists of a fixed half-pulley 37, which has a hub 38 keyed onto the intermediate shaft 5, in the vicinity of the end 10 of the latter, and a conical flange 39 which can co-operate by means of friction with a side 36a of the belt 36, as well as of a mobile half-pulley 40, which has a hub 41 which is secured angularly, and can slide axially on the intermediate shaft 5, and a conical flange 42 which faces the flange 39, and can co-operate by means of friction with an opposite side 36b of the belt 36.

Similarly, the driven pulley 35 consists of a fixed half-pulley 47, which has a hub 48 keyed onto the output shaft 6, and a conical flange 49 which can co-operate by means of friction with the side 36b of the belt 36, as well as of a mobile half-pulley 50, which has a hub 51 which is secured angularly onto the hub 48 of the fixed half-pulley 47, and can slide axially on the latter, and a conical flange 52 which faces the flange 49, and can co-operate by means of friction with the side 36a of the belt 36. The mobile half-pulley 50 is thrust axially by a spring 53, in the direction which tends to bring the flange 52 towards the flange 49.

The fixed-ratio transmission 8 comprises a toothed drive pulley 54, which is integral with the hub 38 of the fixed, drive half-pulley 37 of the variable-ratio transmission, and is thus integral in rotation with the intermediate shaft 5, a toothed, driven pulley 55, which is fitted onto the hub 48, with interposition of a free wheel 56 which can permit one-way transmission of torque from the pulley 55 to the hub 48, but not vice versa, and a toothed belt 57, which engages with the pulleys 27, 28. The pulley 55 defines an axial shoulder for the spring 53.

The transmission ratio $\tau f$ of the transmission 8, which is defined by the expression $\tau f = \omega 54/\omega 55$, in which $\omega 54$ is the angular speed of the drive pulley 54, and $\omega 55$ is the angular speed of the driven pulley 55, is for example equivalent to 3. The transmission ratio $\tau v$ of the transmission 7, defined by the expression $\tau v = \omega 34/\omega 35$, in which $\omega 34$ is the angular speed of the drive pulley 34, and $\omega 35$ is the angular speed of the driven pulley 35, is advantageously variable from a maximum value (i.e. a value of maximum reduction) which is equivalent to $\tau f$, which according to the example is equivalent to 3, to a minimum value which for example is equivalent to 0.5.

The transmission ratio of the transmission 7 is controlled by the axial position of a second thrust unit 58, which slides axially on the tube 16, and can co-operate axially with the mobile half-pulley 40, with interposition of a thrust bearing 59, such as to vary the relative distance between the flanges 39, 42 of the drive pulley 34, and thus the radius of winding of the belt 36. At rest, i.e. when there is no actuating load on the second thrust unit 58, this unit is in a position of end of travel against a shoulder 62 of the tube 16, and does not exert any force on the mobile half-pulley 40; as a result, the distance between the flanges 39, 42 is maximal, and the belt is in a configuration of minimum radius relative to the drive pulley 34, and of maximum radius (beneath the action of the spring 63), relative to the driven pulley 35. The transmission ratio $\tau v$ is thus maximal, but in the absence of axial compression on the belt 36, there is no transmission of torque.

According to the present invention, the first and the second thrust units 30, 58 are controlled by a single, electrically actuated control device 65. The control device 65 substantially comprises an electric motor 66 and a rocker-lever control unit 67 (figure 3), which is pivoted on a pin 68 which is fixed relative to the casing 15, and has an axis C which is at right-angles relative to the plane determined by the axes A and B; the control unit 67 is provided with a first arm 69, which is actuated by the electric motor 66, via a kinematic mechanism 70 which is described in detail hereinafter, and with a second arm 71, which has a forked end 72 (figure 4), which clasps the tube 16, and is interposed between the said thrust units 30, 58, such as to co-operate with both, by means of respective cam-type head surfaces (figure 3), in its own intermediate operative position illustrated in figure 1.

More particularly, the kinematic mechanism 70 substantially comprises an endless wheel 73, which is actuated directly by the electric motor 66, and a return component 74, which is pivoted around a pin 75 with an axis D which is parallel to the axis C; the return component 74 (figures 1 and 2) comprises integrally a toothed segment 75, with an angular amplitude which is substantially equivalent to 180°, which engages with the endless wheel 73, such as to produce rotation of the component 74 itself around the axis C, in response to rotation of the screw itself, and a circular cam 76, which is eccentric relative to the axis D, and co-operates with the first arm 69 of the control unit 67.

The output shaft 6 is connected at its intake to a differential unit 77, which is not described in detail, since it is not part of the present invention, which also acts as a reduction unit/inverter, to the output of which there are connected the axle shafts (not illustrated) of the drive wheels of the vehicle.

The electric motor 66 is controlled by a control unit 80 (figure 5), which receives input signals s1, s2, s3 from a plurality of sensors for operative parameters relative to the driving conditions of the vehicle. In particular, by way of non-limiting example, these sensors can comprise a tachometric sensor 81, which is associated with any rotary unit, at a speed which is univocally correlated (for example is proportional or equivalent) to the speed of rotation of the wheels (signal s1), an acceleration sensor 82 which is associated with the accelerator pedal (not illustrated) or with the butterfly valve of the motor (signal s2), and a sensor 83 which is associated with the gear lever 84 (signal s3). The latter is advantageously of the type with three positions, i.e. D (forwards), N (neutral) and R (reverse).

The functioning of the transmission unit 1 is described hereinafter.

If the gear lever 84 is in the position N, the control unit 67 is maintained by the motor 66, via the kinematic mechanism 68, in a position $\underline{n}$ of end of travel (of maximum rotation clockwise with reference to figure 1), in which the forked end 72 acts on the thrust unit 30, against the action of the spring 25, and keeps the clutch 2 released. The same configuration continues to exist if the lever 84 is in the position D or R, but the signals s1, s2 are kept below respective pre-determined threshold values s10, s20, which correspond respectively to a condition in which the vehicle is almost at a standstill (for example at a speed of 3-4 km/h), and in which the accelerator is almost de-activated (for example at 5% of its own path).

When the gear lever is in the position D or R, if there is a tachometric signal s1 which is smaller than s10, and an acceleration signal s2 which is greater than s20, the control unit 80 controls the electric motor 70 such as to rotate the control unit progressively, in accordance with a relevant law of motion, towards the intermediate pick-up position $\underline{S}$ illustrated in figure 1. The clutch is thus engaged, and the intermediate shaft 5 rotates integrally with the flywheel 3. In this situation, only the fixed-ratio transmission 8 is active, since, for the reasons stated, there is no axial compression on the belt 36, and thus the variable-ratio transmission 7 is not transmitting torque. The driven pulley 55 of the transmission 8 thus tends to entrain the hub 48 and the output shaft 6 which is connected integrally to the latter; thus, in this operative condition, the free wheel 56 connects the pulley 55 integrally to the hub 48, and the pick-up takes place with the transmission ratio τf of the fixed-ratio transmission 8.

When the tachometric signal s1 reaches the said predetermined threshold value s10, the control unit 80 begins to actuate the variable-ratio transmission 7; the motor 70 is controlled such as to rotate the control unit 67 further clockwise, and thus to displace (towards the right with reference to figure 1) the second thrust unit 58 which acts on the mobile half-pulley 40. The belt 36 is thus compressed axially, such as to actuate the transmission of torque by friction between the drive pulley 34 and the belt itself, with an initial transmission ratio equivalent to τf; the transient state is particularly quick and smooth, since the power is transmitted prevalently by the fixed-ratio transmission 8 acting in parallel. When the action of thrust on the mobile half-pulley 40 is continued, this varies the transmission ratio of the transmission 7, by means of the effect of the increase in the radius of winding of the belt 36 on the drive pulley 34, as well as the effect of the corresponding decrease in the radius of winding of the belt 36 on the driven pulley 35. The angular speed of the driven pulley 35, and in particular of the hub 48 of the fixed half-pulley 47, therefore exceeds that of the driven pulley 55 of the fixed-ratio transmission 8; the free wheel 56 therefore disconnects this pulley from the hub 48, and power is transmitted exclusively by means of the variable-ratio transmission 7. The position of the control unit 67 is modulated whilst the vehicle is running, in accordance with a map which is stored in the control unit 80, according to the values of s1 and s2.

The sequence of actions takes place in reverse order in the case of deceleration of the vehicle; in particular, if the speed drops below a pre-determined threshold value, and the accelerator pedal is not actuated, the transmission 7 is returned to the condition of maximum transmission ratio, and the clutch 2 is released.

The advantages which the transmission unit 1 produced according to the present invention make it possible to obtain, are apparent from an examination of its characteristics.

The use of a single control device 65 in order to control the clutch 2 and the transmission ratio of the variable-ratio transmission 7 makes it possible to reduce the number of components, and thus the costs of the transmission unit 1, as well as to simplify the control of the latter. From a functional point of view, the combined use of a fixed-ratio transmission 8 in parallel with the variable-ratio transmission 7 makes it possible to render the transient states smooth and controllable at low speeds, and to increase considerably the life of the trapezoidal belt 36, which is not subjected to sliding in loaded conditions.

Finally, it is apparent that modifications and variants which do not depart from the protective context of the claims can be made to the transmission unit 1.

In particular, in low-power applications, in which wear of the belt 36 is not critical, the variable-ratio transmission 7 alone can be used.

In addition, the electric motor 66 can be controlled according to any type of logic.

Finally, the return component 74 and the control unit 67 can be replaced by any known type of kinematic mechanism, provided that it has an output unit which can control both the thrust units 30, 58. In particular, in order to simplify control of the electric motor 66, the cam 75 can be produced with a profile which is not circular, and such as to vary according to a predetermined law the path of the thrust units 30, 58. As an alternative, rotation of the control unit 67 can be controlled by the electric motor, by means of a simple gearing mechanism, an output unit of which is integral in rotation with the control component 67.

**Claims**

1. Automatic transmission unit (1) with a continuously variable ratio, for a vehicle, the unit comprising:

   an intake unit (3);
   an intermediate shaft (5);
   a clutch (2) which is interposed between the said intake unit (3) and the said intermediate shaft (5), and is provided with a first thrust unit (30) in order to control engagement and release of the clutch (2) itself;
   an output shaft (6);
   a transmission (7) with a continuously variable ratio, which is interposed between the said intermediate shaft (5) and the said output shaft (6), and comprises a drive pulley (34) which is connected in rotation to the said intermediate shaft (5), a driven pulley (35) which is connected in rotation to the said output shaft (5), and a trapezoidal transmission belt (36), which connects the said pulleys (34, 35) to one another, each of the said pulleys (34, 35) comprising a pair of half-pulleys (37, 40; 47, 50) which are provided with relative axial motion, in order to vary the transmission ratio of the said variable-ratio transmission (7), the said transmission (7) comprising a second thrust unit (58) which acts on one of the said half-pulleys (40), in order to vary the said transmission ratio;

   the said transmission unit (1) being characterised in that it comprises a single control device (65) for the said clutch (2) and for the said transmission (7), the said device (65) comprising a control unit (67) which acts respectively on the said first thrust unit (30) and on the said second thrust unit (58), along successive portions of the path of the latter.

2. Unit according to claim 1, characterised in that the said thrust units (30, 58) are mobile along a common direction (A).

3. Unit according to claim 2, characterised in that the said thrust units (30, 58) are annular, and slide axially on a common tubular support (16).

4. Unit according to any one of the preceding claims, characterised in that the said control device (65) comprises an electric motor (66) for actuation of the said control unit (67), sensor means (81, 82, 83) for operative parameters of the said vehicle, and an electronic control unit (80) for control of the said motor (66), in response to input signals (s1, s2, s3) received from the said sensor means (81, 82, 83).

5. Unit according to any one of the preceding claims, characterised in that it comprises a transmission kinematic mechanism (70), which is interposed between the said electric motor (66) and the said control unit (67).

6. Unit according to claim 5, characterised in that the said control unit (67) is a rocker-lever rod, which is pivoted around a first fixed axis (C), and has an end (72) which is interposed between the said thrust units (30, 58).

7. Unit according to claim 6, characterised in that the said transmission kinematic mechanism (70) comprises means (73, 75) for reduction, which are actuated by the said electric motor (66), and cam means (76), in order to convert the rotation of an output unit (75) of the said reduction means (73, 75) into rotation of the said control unit (67) around the said first axis (C).

8. Unit according to claim 7, characterised in that the said cam means comprise a cam (76) which rotates around a second fixed axis (D), which is parallel to the said first axis (C), and co-operates with an arm (69) of the said control unit (67), opposite the said end (72).

**9.** Unit according to claim 8, characterised in that the said reduction unit means (73, 75) comprise an endless screw (73), which is actuated directly by the said motor (66), and a toothed segment (75) which rotates around the said second axis (D), engaged with the endless screw (73), and connected integrally to the said cam (76).

**10.** Unit according to claim 9, characterised in that the said toothed segment (75) and the said cam (76) are produced in a single piece (74).

**11.** Unit according to any one of the preceding claims, characterised in that it comprises a second transmission (8) with a fixed transmission ratio, which is interposed between the said intermediate shaft (5) and the said output shaft (6).

**12.** Unit according to claim 11, characterised in that the said second transmission (8) has a transmission ratio which is substantially equivalent to the maximum transmission ratio of the said variable-ratio transmission (7), and comprises a free wheel (56) which can permit one-way transmission of torque from the said fixed-ratio transmission (8) to the said output shaft (6).

**13.** Unit according to claim 11 or claim 12, characterised in that the said transmission unit (8) comprises a toothed belt (57).

Fig.1

Fig.2

Fig.5

Fig.3

Fig.4

**European Patent Office**

**EUROPEAN SEARCH REPORT**

Application Number

EP 00 12 1692

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 4 671 138 A (SUMIDA SHIZUO ET AL) 9 June 1987 (1987-06-09) * the whole document * | 1,2 | B60K41/22 |
| A | | 11 | |
| X | DE 197 23 394 A (LUK GETRIEBE SYSTEME GMBH) 11 December 1997 (1997-12-11) * column 6, line 60 - column 7, line 1; claim 33 * | 1,4,5 | |
| X | EP 0 027 513 A (CARLISLE INDUS WHEEL) 29 April 1981 (1981-04-29) * the whole document * | 1-3 | |
| A | US 4 925 432 A (MIYAMARU YUKIO ET AL) 15 May 1990 (1990-05-15) * figure 1 * | 1-3,11 | |

**TECHNICAL FIELDS SEARCHED (Int.Cl.7)**

B60K
F16H

The present search report has been drawn up for all claims

| Place of search | Date of completion of the search | Examiner |
|---|---|---|
| THE HAGUE | 4 January 2001 | Van Prooijen, T |

**ANNEX TO THE EUROPEAN SEARCH REPORT
ON EUROPEAN PATENT APPLICATION NO.**          EP 00 12 1692

This annex lists the patent family members relating to the patent documents cited in the above-mentioned European search report.
The members are as contained in the European Patent Office EDP file on
The European Patent Office is in no way liable for these particulars which are merely given for the purpose of information.

04-01-2001

| Patent document cited in search report | | Publication date | Patent family member(s) | | Publication date |
|---|---|---|---|---|---|
| US 4671138 | A | 09-06-1987 | JP | 1442900 C | 08-06-1988 |
| | | | JP | 60098253 A | 01-06-1985 |
| | | | JP | 62052177 B | 04-11-1987 |
| | | | DE | 3439881 A | 23-05-1985 |
| DE 19723394 | A | 11-12-1997 | BR | 9703466 A | 10-11-1998 |
| | | | BR | 9703468 A | 11-08-1998 |
| | | | DE | 19723393 A | 11-12-1997 |
| | | | FR | 2749635 A | 12-12-1997 |
| | | | FR | 2749636 A | 12-12-1997 |
| | | | GB | 2351129 A | 20-12-2000 |
| | | | GB | 2351130 A | 20-12-2000 |
| | | | GB | 2313885 A | 10-12-1997 |
| | | | GB | 2313886 A,B | 10-12-1997 |
| | | | IT | MI971316 A | 04-12-1998 |
| | | | IT | MI971317 A | 04-12-1998 |
| | | | JP | 10081158 A | 31-03-1998 |
| EP 0027513 | A | 29-04-1981 | US | 4301902 A | 24-11-1981 |
| | | | CA | 1130615 A | 31-08-1982 |
| US 4925432 | A | 15-05-1990 | JP | 1083967 A | 29-03-1989 |
| | | | JP | 1121525 A | 15-05-1989 |

EPO FORM P0459

For more details about this annex : see Official Journal of the European Patent Office, No. 12/82